# FASCICULE DE BREVET EUROPEEN

(11) **EP 2 456 549 B1**
(45) Date de publication et mention de la délivrance du brevet: **07.06.2017**
(21) Numéro de dépôt: 10734176.0
(22) Date de dépôt: 23.06.2010
(51) Int. Cl.: B01J 8/02, B01J 8/04, C01B 3/38, B01F 3/02, B01F 5/04

(54) **REACTEUR CATALYTIQUE DE VAPOREFORMAGE D'UNE COUPE D'HYDROCARBURES AVEC DISPOSITIF DE MELANGE ET DE DISTRIBUTION DE GAZ EN AMOUNT DE LA ZONE CATALYTIQUE**
KATALYTISCHEN DAMPFREFORMIERUNGSREKATORS EINER KOHLENSTOFFFRAKTION MIT EINER GASMISCHUNGS- UND GASVERTEILUNGSVORRICHTUNG STROMAUFWÄRTS DER KATALYTISCHEN ZONE
HYDROCARBON FRACTION STEAM REFORMING CATALYTIC REACTOR WITH GAS MIXING AND DISPENSING DEVICE UPSTREAM OF THE CATALYTIC ZONE

(30) Priorité: 21.07.2009 FR 0903588
(43) Date de publication de la demande: 30.05.2012
(73) Titulaire: IFP Énergies nouvelles, 92852 Rueil-Malmaison Cedex (FR)
(72) Inventeur: BOYER, Christophe, F-69390 Charly (FR); NICOLLE, André, 92000 NANTERRE (FR)
(86) Numéro de dépôt international: PCT/FR2010/000463
(87) Numéro de publication internationale: WO 2011/010006

(56) Documents cités:
- EP-A1- 1 147 809
- EP-A2- 1 180 393
- US-A- 4 865 820
- US-A- 5 106 590
- US-A1- 2002 142 199
- US-A1- 2006 201 065
- US-A1- 2008 244 974

## Description

### DOMAINE DE L'INVENTION

La présente invention se situe dans le domaine des dispositifs permettant de réaliser un mélange rapide et homogène de gaz devant réagir dans une zone de réaction catalytique située en aval dudit dispositif. Dans le cadre des réactions concernées par la présente invention, l'un des gaz est appelé réactif 1 et l'autre gaz est appelé réactif 2.

Le réactif 1 est généralement une charge hydrocarbonée vaporisée, éventuellement en mélange avec de la vapeur d'eau, et le réactif 2 peut être de l'hydrogène pur ou en mélange, de l'air, de l'oxygène, ou tout mélange d'air et d'oxygène dans des proportions quelconques.

Le réactif 2 peut également contenir une certaine proportion de vapeur d'eau.

Le présent dispositif peut s'appliquer à l'entrée de tout réacteur catalytique dont le diamètre est compris ente 0,05 et 10 mètres, et préférentiellement compris entre 0,1 et 5 mètres.

Le problème que l'on cherche à résoudre le présent dispositif est de réaliser un mélange homogène et rapide des réactifs 1 et 2, et une distribution homogène de l'écoulement gazeux résultant dudit mélange sur toute la section d'entrée de la zone catalytique située en aval du présent dispositif de mélange et de distribution.

Par ailleurs, le mélange des réactifs doit être le plus homogène possible au sens où il doit avoir une composition en réactif 1 et en réactif 2 sensiblement identique en tout point de la section d'entrée dans la zone catalytique.

Enfin, le mélange doit également être homogène du point de vue de la répartition des vitesses, c'est à dire que le profil de vitesse radiale doit être aussi plat que possible à l'entrée du réacteur catalytique.

### EXAMEN DE L'ART ANTERIEUR

Le brevet US4865820 décrit un dispositif de mélange de gaz consistant en une pluralité de tubes se terminant par des sections coniques élargies. Le gaz principal est injecté dans l'axe des tubes et le gaz secondaire est introduit radialement par rapport aux tubes à travers des orifices percés à la paroi des tubes. Le système permet une bonne distribution du mélange du gaz principal et du gaz secondaire dans la mesure où les extrémités coniques élargies couvrent sensiblement toute la section du réacteur. L'élargissement de la section de sortie des tubes (donc d'entrée dans la zone catalytique) a pour but de réduire la vitesse du mélange gazeux et d'éviter la formation de vortex. Dans le brevet cité aucun dispositif n'est décrit pour assurer la répartition du flux de gaz secondaire à l'amont des orifices d'introduction dans les tubes.

Le brevet US 2002/0142199 décrit un système de mélange de gaz incluant une pluralité de tubes traversant une plaque perforée. Le premier gaz est injecté à travers le tube et le second gaz est injecté à travers des orifices dans une zone annulaire comprise entre les tubes et la plaque.

Le mélange des gaz est réalisé principalement par diffusion moléculaire entre les deux flux adjacents. De ce fait la distance nécessaire pour obtenir un bon mélange peut être relativement importante.

Le dispositif selon la présente invention permet d'organiser une zone dite zone de mélange, alimentée de façon homogène, ladite zone étant une zone de forte turbulence, suivie dans certains cas d'une zone dite zone de distribution, qui permet de ralentir la vitesse moyenne du gaz et de réaliser l'entrée dans la zone catalytique du réacteur avec un profil de vitesse pratiquement plat et une très bonne homogénéité du mélange gazeux. US 5106590 décrit un dispositif de mélange et de distribution de deux ou plusieurs gaz à l'entrée d'un réacteur catalytique, par exemple pour l'oxydation partielle d'une charge gazeuse d'hydrocarbures.

EP 1147809 A1 décrit un dispositif de distribution d'un mélange polyphasique sur un lit de solide granulaire comportant un élément brise-jet poreux.

### DESCRIPTION SOMMAIRE DES FIGURES

La figure 1 donne une vue schématique du dispositif selon l'invention avec ses principales dimensions dans le cas où la pluralité de chambres internes (I) est enfermée dans une chambre externe (II) commune à l'ensemble des chambres internes (I).
La figure 2 donne une vue schématique d'une chambre interne (I) selon l'invention.
Les figures 3a et 3b sont des visualisations de l'écoulement des gaz obtenues par simulation qui permettent d'apprécier le champs des vitesses et la qualité de la distribution en entrée de la zone catalytique avec et sans le dispositif selon l'invention.

### DESCRITION SOMMAIRE DE L'INVENTION

Le réacteur selon la présente invention comporte une zone catalytique associée à un dispositif de mélange et de distribution d'un premier gaz (ou réactif 1) et d'un second gaz (ou réactif 2) situé en amont de ladite zone catalytique, les deux gaz constituant les réactifs.

Le dispositif est constitué d'une pluralité de chambres internes (I) de diamètre D1, d'une chambre externe (II) de diamètre D2, chaque chambre interne (I) possédant une zone inférieure élargie de section de sortie Ωs, et une zone de distribution (IV), commune à l'ensemble des chambres (I) et s'intercalant entre les sections de sortie Ωs des chambres internes (I) et la section d'entrée Ωr de la zone catalytique.

Lorsqu'elle existe, la zone de distribution (IV) contient des éléments appelé brise jet, qui sont constitués d'une plaque pleine positionnée de manière sensiblement horizontale, au droit de chaque section de sortie Ωs des chambres internes (I) à une hauteur H4 de ladite section de sortie.

Chaque chambre interne (I) est munie d'une tubulure d'entrée E1 permettant l'entrée du réactif 1, et la chambre externe (II) est munie d'une tubulure d'entrée E2 permettant l'entrée du réactif 2 et disposée dans la partie supérieure de la chambre externe (II).

La chambre externe (II) est munie d'une plaque perforée (1) positionnée à une distance H2 par rapport à la tubulure d'entrée E2.

Le dispositif peut ainsi être vu comme une amélioration du concept d'injecteur décrit dans le brevet US4865820 pour lequel on s'attache à optimiser l'homogénéité de l'alimentation de la chambre de mélange et ensuite la répartition du flux résultant dudit mélange.

La chambre (II) communique avec chacune des chambres (I) par une série d'orifices (2) percés à la paroi de chaque chambre interne (I).

Chaque chambre interne (I) présente une extrémité de sortie élargie de diamètre Ds et de section de sortie Ωs. Dans un cas de figure non revendiqué, la somme des sections de sortie Ωs des chambres (I) est égale à la section de la zone catalytique Ωr, à plus ou moins 10% près, et alors lesdites sections de sortie communiquent directement avec la zone catalytique. Le dispositif de mélange est tel que la somme des sections de sortie Ωs des chambres (I) est strictement plus petite que Ωr, et alors on aménage une zone (IV) comprise entre la section de sortie de chaque chambre interne (I) et la section d'entrée Ωr de la zone catalytique, zone (IV) dite zone de distribution, la dite zone (IV) ayant une hauteur H3 comprise entre 2D1 et 50 D1, et préférentiellement comprise entre 2D1 et 30D1, et comportant une pluralité de brises jet positionnés au droit de chaque section de sortie Ωs, à une hauteur H4 par rapport aux dites sections de sortie.

La zone élargie (III) de chaque chambre interne (I) s'étend depuis la partie de la chambre interne (I) percée des orifices (2) jusqu'à l'extrémité de sortie Ωs de cette dernière. Elle présente des parois de forme conique faisant un angle (α) par rapport à la verticale.

Le dispositif selon l'invention est donc constitué de la pluralité de chambres interne (I), de la chambre externe (II) commune à la pluralité des chambres internes (I), de la zone élargie (III) de chaque chambre interne (I) de section de sortie Ωs, et en fonction de la somme des sections de sortie Ωs rapportée à la section d'entrée de la zone catalytique Ωr, de la zone de distribution (IV), munie d'une pluralité de brises jet situés au droit de chacune des sections de sortie Ωs.

Le dispositif selon l'invention présente en outre les caractéristiques suivantes:
- une hauteur H2 comprise entre 20 et 300 mm, et préférentiellement comprise entre 50 et 150 mm,
- une zone élargie (III) sur chacune des chambres internes (I) présentant une forme conique élargie dans le sens d'écoulement des réactifs, l'angle (α) des parois de ladite zone de mélange par rapport à la verticale étant compris entre 5° et 45 °, et préférentiellement compris entre 7° et 25°.
- un rapport de la somme des sections de sortie Ωs des chambres internes (I) sur la section d'entrée de la zone catalytique Ωr compris entre 0,1 et 1, et préférentiellement compris entre 0,3 et 1

Les brises jet équipant la zone de distribution (IV) sont positionnés à une distance H4 par rapport aux sections de sortie de chaque chambre interne (I), telle que H4 est égale à D2/5.

Dans une variante préférée du dispositif selon l'invention, la plaque perforée (1) équipant la chambre externe (II) présente un degré d'ouverture compris entre 5% et 50%, et préférentiellement compris entre 10% et 30%. Le degré d'ouverture se définit comme le rapport de la surface ouverte sur la section géométrique de la plaque.

Le pas entre les orifices de la plaque perforée (1) est préférentiellement compris entre D'/3 et D'/10, en désignant par D' la différence entre le pas séparant les chambres internes (I) et le diamètre (D1) desdites chambres internes (I).

La densité des chambre internes (I) est comprise entre 10 et 500 par m² de section de chambre externe (II), et de préférence entre 20 et 100 par m² de section de chambre externe (II).

Dans une autre variante particulière du dispositif selon l'invention, la pluralité de chambres internes (I) se réduit à une seule et dans ce cas, le pas entre les orifices de la plaque perforée (1) est inférieur à D/3, et préférentiellement inférieur à D/10, D désignant la différence entre le diamètre D2 de la chambre externe (II), et le diamètre D1 de la chambre interne (I).

L'invention concerne dans une de ses applications le procédé de vaporéformage autotherme de coupes hydrocarbures, utilisant le dispositif selon l'invention, dans lequel le gaz combustible est constitué de la coupe hydrocarbure et de vapeur d'eau, et le gaz comburant est constitué d'air et de vapeur d'eau. La coupe hydrocarbure peut être un mélange quelconque d'hydrocarbures de différentes familles chimiques (paraffines, oléfines, aromatiques) avec un nombre d'atomes de carbone pouvant aller de 1 à 20, et préférentiellement compris entre 1 et 10.

### DESCRIPTION DETAILLEE DE L'INVENTION

L'invention consiste en un réacteur catalytique associé à un dispositif de mélange et de distribution de deux réactifs gazeux notés réactif 1 et réactif 2, en vue d'alimenter une zone catalytique située en aval du dit dispositif. Le dispositif se situe en amont de la zone catalytique du réacteur, et permet de délivrer dans la dite zone catalytique un mélange gazeux homogène et présentant une distribution radiale de vitesse la plus uniforme possible.

On entend par distribution radiale de vitesse, le profil des vitesse du gaz selon un diamètre quelconque de la section d'entrée du réacteur.

Il est essentiel pour certains types de réactions, notamment les réactions de combustion, que le mélange gazeux soit le plus homogène possible à l'entrée de la zone catalytique, car toute hétérogénéité peut se traduire par la formation d'un point chaud, ou plus généralement d'un déséquilibre thermique au sein de ladite zone catalytique.

Les gaz à mélanger peuvent être distingués en un premier gaz, dit réactif 1, constituant la charge pouvant en outre contenir de la vapeur d'eau, et un second gaz, dit réactif 2, contenant généralement de l'oxygène et de la vapeur d'eau, éventuellement de l'azote et du CO2, ou d'autres gaz inertes.

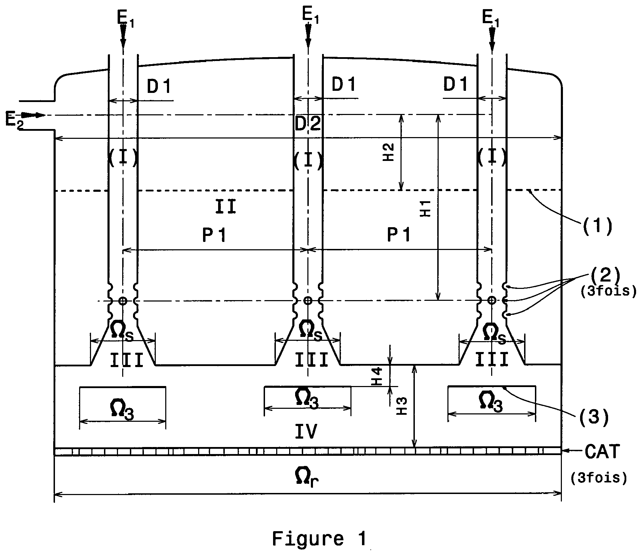

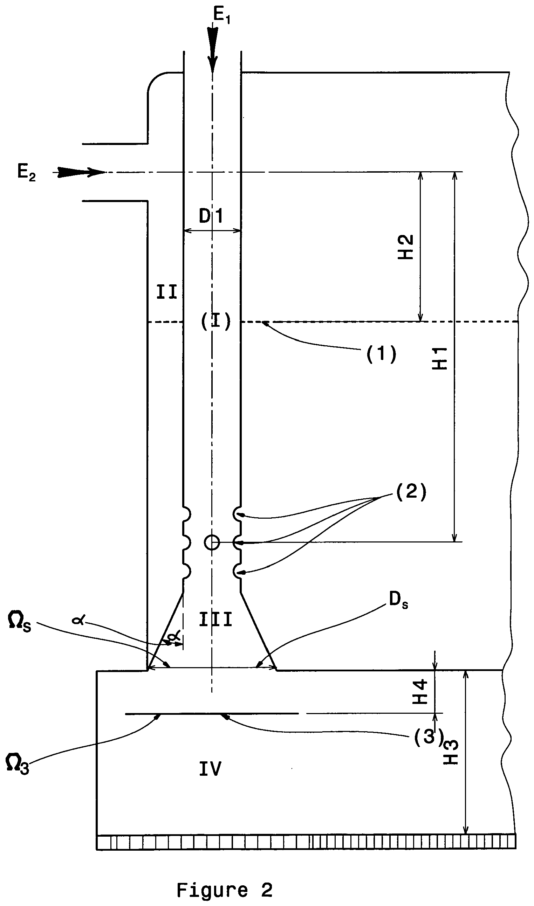

La suite de la description est faite en référence aux figures 1 et 2.

Le dispositif de la présente invention est composé de deux chambres, une pluralité de chambres (I) pour l'introduction du réactif 1, dite chambres internes (I), l'autre unique pour l'introduction du réactif 2, dite chambre externe (II). La pluralité de chambres internes (I) sensiblement cylindriques est entourée par la chambre externe (II) également sensiblement cylindrique.

Chacune des chambres internes (I) dispose d'une entrée notée E1. La chambre externe (E2) possède une entrée E2 placée dans la partie supérieure de la chambre externe (II).

La pluralité de chambres internes (I) est mise en communication avec la chambre externe (II) par un ensemble d'orifices (2) percés dans les parois des chambres internes (I) à une distance (H1) repérée par rapport à la tubulure d'entrée E2, sensiblement égale à deux fois la distance (H2) séparant la tubulure d'entrée E2 de la plaque perforée (1).

Le réactif 2 introduit par l'entrée E2 de la chambre externe (II) passe dans les chambres internes (I) en traversant les orifices (2).

Chaque chambre interne (I) présente dans sa partie inférieure et jusqu'à son extrémité de sortie un élargissement conique se terminant par la section de sortie Ωs. Cet élargissement est noté zone (III) sur les figures 1 et 2.

Le pas entre les orifices de la plaque perforée (1) est préférentiellement compris entre D'/3 et D'/10, en désignant par D' la différence entre le pas des chambres internes (I) et le diamètre (D1) des chambres internes (I).

Le rapport de la section de sortie Ωs de chaque chambre interne (I) sur la section d'entrée Ωr de la zone catalytique est généralement compris entre 0,1 et 1, et préférentiellement compris entre 0,3 et 1. Dans un cas de figure non revendiqué, la section d'entrée de la zone catalytique Ωr est égale à la somme des sections de sortie Ωs de chacune des chambres internes (I), à plus ou moins 10% près, et alors l'ensemble desdites sections de sortie Ωs débouche directement dans la zone catalytique. Le dispositif de mélange est tel que la section d'entrée de la zone catalytique Ωr est strictement supérieure (c'est à dire de plus de 10%) à la somme des sections de sortie des chambres internes (I), et alors le présent dispositif prévoit d'intercaler entre les sections de sortie Ωs de chaque chambre interne (I) et la zone catalytique une chambre de distribution (IV) de même section que la zone catalytique, et munie d'une pluralité de brises jet (3) placés au droit de chaque section de sortie Ωs à une distance H4 desdites sections de sortie égale à D2/5.

La chambre externe (II) est munie d'une plaque perforée (1) positionnée à une distance H2 par rapport à la tubulure d'entrée (E2), H2 étant compris entre 20 et 300 mm, et préférentiellement compris entre 50 et 150 mm.

La plaque perforée (1) a un degré d'ouverture compris entre 5% et 50%, préférentiellement compris entre 10% et 30 %.

Le pas entre les orifices de la plaque perforée (1) est alors préférentiellement compris entre D'/3 et D'/10, en désignant par D' la différence entre le pas séparant les chambres internes (I), et le diamètre externe (D1) desdites chambres internes (I).

Les brises jet équipant la zone de distribution (IV) sont positionnés à une distance H4 par rapport aux sections de sortie de chaque chambre interne (I), telle que H4 est égale à D2/5.
Chaque brise jet (3) est généralement constitué d'une plaque pleine placée sensiblement perpendiculairement au sens d'écoulement des gaz en sortie de chaque chambre interne (I). Le brise-jet (3) a essentiellement pour effet de dissiper l'énergie cinétique du mélange gazeux issu de chaque chambre interne (I).
Le présent dispositif est destiné à être appliqué à des réacteurs dont le diamètre peut aller de 0,1 m jusqu'à 5 mètres.
Lorsque le diamètre du réacteur est inférieur à 0,3 m, la pluralité de chambres internes (I) se réduit à une seule chambre interne (I).

### EXEMPLE SELON L'INVENTION

L'exemple consiste en un réacteur autotherme traitant une charge constituée d'hydrocarbures (réactif 1) en C4/C5 et de vapeur d'eau et utilisant un gaz comburant (réactif 2) constitué d'un mélange d'oxygène et de vapeur d'eau.

Le tableau 1 ci dessous fournit les débits, compositions et température de chacun des deux gaz.

Le dispositif est constitué d'une chambre externe (II) et de 7 chambres internes (I) disposées suivant un pas triangulaire complété par une chambre de distribution (IV) munie de brise jets (3) situés en regard de la section de sortie Ωs des chambres internes (I).

Le dispositif a les dimensions suivantes rapportées au diamètre (D1) des chambres internes (I) :
- diamètre de la chambre interne (I) : D1
- diamètre de la chambre externe (II) : 18D1
- pas entre chambre internes P1 : 6D 1
- diamètre de la zone de distribution (IV) : 18D1
- diamètre de l'extrémité de sortie de la zone de mélange (III) : 2D1
- angle α : 9°
- distance H1 : 10D1
- distance H2 : 5D1
- distance H3 : 6D1
- diamètre du brise-jet : 2,5 D1
- distance H4 : D2/5
- plaque perforée (1) de degré d'ouverture: 30 %
- rapport Ωs/Ωr de la somme des section de sortie de la zone de mélange (III) sur la section d'entrée de la zone catalytique égal à 0,5

Les vitesses et les compositions des gaz sont simulées par application d'un logiciel de mécanique des fluides commercialement appelé FLUENT.

Dans le cas A (selon l'art antérieur) on a utilisé un dispositif selon les dimensions précédentes mais sans la plaque perforée (1) et sans brise-jet.

Dans le cas B (selon l'invention) on ajoute la plaque perforée (1) de degré d'ouverture 30 % et un brise-jet (3) positionné à une distance H4 de la section de sortie de la zone (III) égale à D2/5.

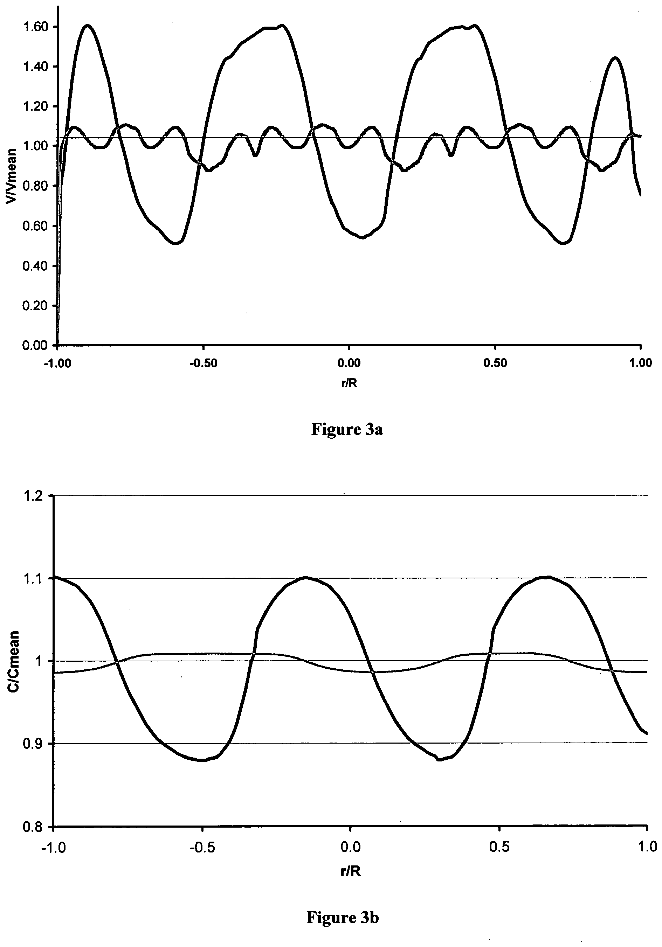

La figure 3a permet de comparer le profil des vitesses moyennes calculées suivant le diamètre du réacteur pris à l'entrée de la zone catalytique, c'est à dire sur la section de sortie de la chambre de distribution (IV) dans le cas A et le cas B.

En abscisse on a porté le ratio r du rayon courant sur le rayon R du réacteur.

Le cas A correspond à une dissymétrie du champs de vitesse particulièrement visible au niveau de l'entrée dans la zone élargie (III) où le vecteur vitesse présente une déviation par rapport à l'axe vertical.

Le cas B montre au contraire une excellente symétrie des vecteurs vitesse qui sont bien répartis sur l'ensemble de la section d'entrée de la zone élargie (III) et de la zone de distribution (IV).

La figure 3b permet de comparer les champs des concentrations dans le cas A et le cas B.

En ordonnée on a porté le ratio de concentration en combustible au rayon r sur la concentration moyenne à l'entrée de la zone catalytique en fonction du ratio du rayon courant r sur le rayon R du réacteur pour le cas A (ligne grisée) et le cas B (ligne noire).

En abscisse on a porté le ratio r du rayon courant sur le rayon R du réacteur.

On observe dans le cas A (selon l'art antérieur) une dissymétrie du champs de concentration qui se prolonge tout au long de la zone élargie (III) et de la zone de distribution (IV). Cela illustre l'importance de réaliser un champs de vitesse le plus uniforme possible dès la mise en contact des gaz au niveau de l'entrée dans la zone élargie (III).

Dans le cas B (selon l'invention) la symétrie du champs de concentration est au contraire bien réalisée dès la mise en contact des réactifs et se maintient à la fois dans la zone de mélange (III) et dans la zone de distribution (IV).

## Revendications

1. Réacteur comportant une zone catalytique associée à un dispositif de mélange et de distribution d'un premier gaz et d'un second gaz situé en amont de ladite zone catalytique, le dispositif étant constitué d'une pluralité de chambres internes (I) de diamètre D1, d'une chambre externe (II) de diamètre D2, enveloppant la pluralité de chambres internes (I), la densité de chambres internes (I) étant comprise entre 10 et 500 par m2 de section de chambre externe (II), chaque chambre interne (I) présentant une zone inférieure élargie (III) se terminant par une section de sortie Ωs, chaque chambre interne (I) étant munie d'une tubulure d'entrée E1, et la chambre externe (II) étant munie d'une tubulure d'entrée E2 et d'une plaque perforée (1) positionnée à une distance H2 par rapport à la tubulure d'entrée E2, la hauteur H2 étant comprise entre 20 mm et 300 mm, et préférentiellement comprise entre 50 mm et 150 mm, le pas entre les orifices de la plaque perforée (1) étant compris entre D'/3 et D'/10, en désignant par D'la différence entre le pas (P1) séparant les chambres internes (I), et le diamètre (D1) desdites chambres internes (I),
la chambre externe (II) communiquant avec chacune des chambres internes (I) par une série d'orifices (2) percés à la paroi de chaque chambre interne (I) dans une zone située à la distance H1 par rapport à la tubulure d'entrée E2, H1 étant égal au double de H2, et l'angle (α) des parois de la zone élargie (III) par rapport à la verticale étant compris entre 5° et 45°, et préférentiellement compris entre 7° et 25°,
ledit dispositif étant tel que la somme des sections de sortie Ωs des chambres internes (I) est strictement inférieure à la section d'entrée de la zone catalytique Ωr, et le dispositif comprenant en outre une chambre de distribution (IV) s'intercalant entre les sections de sortie Ωs et la section d'entrée Ωr de la zone catalytique, la dite chambre de distribution (IV) ayant une hauteur H3 comprise entre 2 D1 et 50 D1, et préférentiellement comprise entre 2 D1 et 30 D1.

2. Réacteur selon la revendication 1 dans lequel la zone de distribution (IV) contient un brise jet positionné à une hauteur H4 au dessous de la section de sortie Ωs de chaque chambre interne (I), telle que H4 est égale à D2/5.

3. Réacteur selon la revendication 1 dans lequel la plaque perforée (1) équipant la chambre externe (II) présente un degré d'ouverture compris entre 5% et 50%, et préférentiellement compris entre 10% et 30%.

4. Réacteur selon la revendication 1 dans lequel la densité des chambre internes (I) est comprise entre 20 et 100 par m² de section de chambre externe (II).

5. Procédé de vaporéformage autotherme d'une coupe hydrocarbure à nombre d'atomes de carbone compris entre 1 et 20, et préférentiellement compris entre 1 et 10, utilisant le dispositif selon l'une des revendications 1 à 4.

6. Procédé de vaporéformage autotherme d'une coupe hydrocarbure, utilisant le dispositif selon l'une des revendication 1 à 4, dans lequel le gaz combustible est constitué d'un mélange d'hydrocarbure et de vapeur d'eau, et le gaz comburant est constitué d'un mélange d'air et de vapeur d'eau.

## Patentansprüche

1. Reaktor, aufweisend eine Katalysatorzone, die einer der Katalysatorzone vorgeordneten Vorrichtung zum Mischen und Verteilen eines ersten Gases und eines zweiten Gases zugeordnet ist, wobei die Vorrichtung aus einer Vielzahl von Innenkammern (I) mit einem Durchmesser D1, einer Außenkammer (II) mit einem Durchmesser D2, die die Vielzahl von Innenkammern (I) umgibt, besteht, wobei die Dichte der Innenkammern (I) zwischen 10 und 500 pro m² des Querschnitts der Außenkammer (II) beträgt, jede Innenkammer (I) einen erweiterten Bodenbereich (III) aufweist, der mit einem Ausgangsabschnitt Ωs endet, jede Innenkammer (I) mit einem Einlaufstutzen E1 versehen ist und die Außenkammer (II) mit einem Einlaufstutzen E2 und einer perforierten Platte (1) versehen ist, die mit einem Abstand H2 zu dem Einlaufstutzen E2 angeordnet ist, wobei die Höhe H2 zwischen 20 mm und 300 mm und bevorzugt zwischen 50 mm und 150 mm liegt und der Abstand zwischen den Öffnungen der perforierten Platte (1) zwischen D'/3 und D'/10 liegt, wobei D' die Differenz zwischen dem die Innenkammern (I) trennenden Abstand (P1) und dem Durchmesser (D1) der Innenkammern (I) darstellt,
wobei die Außenkammer (II) über eine Reihe von Öffnungen (2), die in einem im Abstand H1 zu dem Einlaufstutzen E2 liegenden Bereich in die Wand einer jeden Innenkammer (I) gebohrt sind, mit jeder der Innenkammern (I) in Verbindung steht, wobei H1 dem Doppelten von H2 entspricht und der Winkel (α) der Wände des erweiterten Bereichs (III) gegenüber der Vertikalen zwischen 5° und 45°, bevorzugt zwischen 7° und 25° liegt,
wobei die Vorrichtung so ausgelegt ist, dass die Summe der Ausgangsabschnitte Ωs der Innenkammern (I) unbedingt geringer ist als der Eingangsabschnitt der Katalysatorzone Ωr und die Vorrichtung ferner eine Verteilerkammer (IV) umfasst, die zwischen den Ausgangsabschnitten Ωs und dem Eingangsabschnitt Ωr liegt, wobei die Verteilerkammer (IV) eine Höhe H3 aufweist, die zwischen 2D1 und 50D1, bevorzugt zwischen 2D1 und 30D1 liegt.

2. Reaktor nach Anspruch 1, bei dem der Verteilungsbereich (IV) einen Strahlverteiler enthält, der mit einer Höhe H4 unterhalb des Ausgangsabschnitts Ωs jeder Innenkammer (I) angeordnet ist, sodass H4 gleich D2/5 ist.

3. Reaktor nach Anspruch 1, bei dem die perforierte Platte (1), mit der die Außenkammer (II) ausgestattet ist, einen Offenheitsgrad zwischen 5 % und 50 % aufweist, bevorzugt zwischen 10 % und 30 %.

4. Reaktor nach Anspruch 1, bei dem die Dichte der Innenkammern (I) zwischen 20 und 100 pro m² des Querschnitts der Außenkammer (II) beträgt.

5. Verfahren zur autothermen Dampfreformierung einer Kohlenwasserstofffraktion mit einer Kohlenstoffzahl zwischen 1 und 20, bevorzugt zwischen 1 und 10, wobei die Vorrichtung nach einem der Ansprüche 1 bis 4 verwendet wird.

6. Verfahren zur autothermen Dampfreformierung einer Kohlenwasserstofffraktion unter Verwendung der Vorrichtung nach einem der Ansprüche 1 bis 4, bei dem das Brenngas aus einem Gemisch von Kohlenwasserstoff und Wasserdampf besteht und das Sauerstoffträgergas aus einem Gemisch von Luft und Wasserdampf besteht.

## Claims

1. Reactor having a catalytic zone associated with a device for mixing and distributing a first gas and a second gas located upstream of a catalytic zone, the device being constituted by a plurality of internal chambers (I) with diameter D1, an external chamber (II) with diameter D2, enveloping the plurality of internal chambers (I), the density of internal chambers (I) being in the range 10 to 500 per m² of section of the external chamber (II), each internal chamber (I) having an enlarged lower zone (III) terminating in an outlet section Ωs, each internal chamber (I) being provided with an inlet pipe (E1), and the external chamber (II) being provided with an inlet pipe (E2) and a perforated plate (1) positioned at a distance H2 with respect to the inlet pipe (E2), the height H2 being in the range 20 mm to 300 mm, preferably in the range 50 mm to 150 mm, the pitch between the orifices of the perforated plate (1) being in the range D'/3 to D'/10, wherein D' is defined as the difference between the pitch (P1) separating the internal chambers (I), and the diameter D1 of said internal chambers(I), the external chamber (II) communicating with each of the internal chambers (I) via a series of orifices (2) pierced in the wall of each internal chamber (I) in a zone located at a distance H1 with respect to the inlet pipe (E2), H1 being equal to twice H2, and the angle (α) of the walls of the enlarged zone (III) with respect to the vertical being in the range 5° to 45°, preferably in the range 7° to 25°, said device being such that the sum of the outlet sections Ωs of the internal chambers (I) is strictly less than the inlet section of the catalytic zone Ωr, and the device further comprising a distribution chamber (IV) interposed between the outlet sections Ωs and the inlet section Ωr of the catalytic zone, said distribution chamber (IV) having a height H3 in the range 2 to 50 D1, preferably in the range 2 to 30 D1.

2. Reactor according to claim 1 in which the distribution zone (IV) contains a jet breaker located at a height H4 below the outlet section Ωs of each internal chamber (I), so that H4 is equal to D2/5.

3. Reactor according to claim 1, in which the perforated plate (1) provided in the external chamber (II) has a degree of opening in the range 5% to 50%, preferably in the range 10% to 30%.

4. Reactor according to claims 1, in which the density of the internal chambers (I) is in the range 20 to 100 per m² of section of the external chamber (II).

5. A process for autothermal steam reforming of a hydrocarbon cut containing in the range 1 to 20, preferably in the range 1 to 10 carbon atoms, using the device in accordance with one of claims 1 to 4.

6. A process for autothermal steam reforming of a hydrocarbon cut using the device in accordance with one of claims 1 to 4, in which the fuel gas is constituted by a mixture of hydrocarbon and steam and the oxidant gas is constituted by a mixture of air and steam.
